# EUROPEAN PATENT APPLICATION

(11) **EP 1 378 304 A2**
(43) Date of publication of application: **07.01.2004**
(21) Application number: 03014364.8
(22) Date of filing: 26.06.2003
(51) Int. Cl.: B23B 27/14, C04B 41/45, C04B 41/50, C04B 41/52

(54) **Wear resistant coating with enhanced toughness**

(30) Priority: 01.07.2002 SE 0202036
(71) Applicant: SECO TOOLS AB, S-737 82 Fagersta (SE)
(72) Inventor: Joelsson, Torbjörn, 58233 Linköping (SE); Hultman, Lars, 58931 Linköping (SE); Sjölén, Jacob, 73741 Fagersta (SE); Hörling, Anders, 58439 Linköping (SE); Karlsson, Lennart, 73733 Fagersta (SE)
(74) Representative: Taquist, Lennart

(57) **Abstract**

The present invention relates to a cutting tool insert comprising a substrate and a coating. The coating composed of one or more layers of refractory compounds of which at least one layer comprises a so called MAX-phase defined as Mₙ₊₁AXₙ where n is 1, 2 or 3, M is one of the elements Ti, Zr, Hf, V, Nb, Ta, Cr or Mo, A is Al, Si or S, X is C, N and/or B.

## Description

### BACKGROUND OF THE INVENTION

The present invention relates to a cutting tool for machining by chip removal consisting of a substrate of cemented carbide, cermet, ceramics, cubic boron nitride based material or high speed steel and a hard and wear resistant refractory coating. The coating is composed of at least one layer of a refractory compound Mₙ₊₁AXₙ where n is 1, 2 or 3, M is one of the elements Ti, Zr, Hf, V, Nb, Ta, Cr or Mo, A is Al, Si or S, X is nitrogen and/or carbon.

The notation, MAX-phases, is used for a wide range of ceramic materials based on the formula Mₙ₊₁AXₙ wherein M is a transition metal, A is Si, Al, Ge or Ga and X is C, N or B. In the case that X is N only, Mₙ₊₁ANₙ, they are referred to as MAN-phases. This family of materials has a hexagonal crystal structure and nanolaminated constitution from large unit cells. The MAX- and MAN-phases are characterised by the low content of non-metallic atoms compared to metallic atoms, i.e. for n=1; 25 at%, n=2; 33 at% and n=3 37.5 at%.

The preparation of MAX-phases in form of bulk material of the Ti₃SiC₂ phase was first reported in 1967 by Nowotny, Monatsh für Chem. 98:329-337 (1967).

In 1972 Nickl et al, J. Less-Common Metals 26:335 (1972), reported that they have grown Ti₃SiC₂ by chemical vapour deposition (CVD) using the reactive gases SiCl₄, TiCl₄, CCl₄ and H₂. Later also Goto et al., Mat. Res. Bull. 22:1195-1201 (1987), reported growth of Ti₃SiC₂ by a CVD process based on the same reactive gases as Nickl et al. at a deposition temperature between 1300 and 1600 °C.

The possibility to grow pure phase single-crystal Ti₃SiC₂ using PVD technique on single crystal MgO (111) substrates by epitaxial growth have been reported by Seppänen et al (Proc. Scandinavian Electron Microscopy Society, Tampere, Finland, 11-15 June, 2002, s 142-143 ISSN 1455-4518. Three different teqniques were reported (i) unbalanced DC magnetron sputtering from elemental targets. (ii) Unbalanced magnetron sputtering from elemental target and evaporation of C60. (iii) Unbalanced magnetron sputtering from stoichiometric target.

The anisotropic hardness of the MAX phase Ti₃SiC₂ single crystals where first reported by Nickl et al, J. Less-Common Metals 26:283 (1972).

A review of mechanical properties of MAX-phases is made by M.W. Barsoum, Solid St. Chem. Vol 28 (2000) 201-281. Several unusual properties that are beneficial for applications of ceramics were reported for the Ti₃SiC₂ bulk material including high toughness, high flexural strength, crack growth resistance, cyclic crack growth resistance etc.

US 5,942,455 discloses a process to produce bulk products having single phases or solid solutions of the formula M₃X₁Z₂ wherein M is a transition metal, X is Si, Al or Ge and Z is B, C or N by taking a powdered mixture containing M, X and Z to a temperature of about 1000 °C to about 1800 °C. The products so formed have excellent shock resistance, oxidation resistance and machinability.

US 6,013,322 discloses a surface treatment by contacting the surface of a "312-compound" (e.g. Ti₃SiC₂) ternary ceramic material with a surface-modifying compound selected from carburization agents, silicidation agents, nitridation agents and boronization agents, at an elevated temperature of at least about 600 °C for a period of time sufficient to provide a surface reaction layer of at least about one micron in thickness in the surface-treated material.

In the system of Ti/Al and other transition metal nitrides, carbides and oxides many patents occur e.g. for single layers e.g. US 5,549,975, multi-layers e.g. US 5,330,853, gradients e.g. EP 448,720, or combinations thereof e.g. US 5,208,102. However, all those materials are close to stoichiometry between metallic and non-metallic element of the cubic'phase of NaCl-type i.e. 50 at%,

It is an object of the present invention to provide a MAX-coated cemented carbide cutting tool insert for machining by chip removal.

It is a further object of the present invention to provide a method for depositing MAX-layers with high toughness using PVD-technique.

### BRIEF DESCRIPTION OF THE DRAWINGS

Figure 1 is a Scanning Electron microscope (SEM) image in 6000X of a coated cutting tool insert according to the present invention where
   A - MAN-layer (~1 µm) grown using 6.7 mPa N₂.
   B - The first layer of (Ti_{0.33}Al_{0.67})N (~2 µm)
   S - Substrate
Figure 2 a) is an X-ray diffraction pattern of the coated insert shown in figure 1, and b) shows the X-ray diffraction pattern of a similar first layer without the top MAN-layer.

### DETAILED DESCRIPTION OF THE INVENTION

According to the present invention there is provided a cutting tool for machining by chip removal comprising a body of a hard alloy of cemented carbide, cermet, ceramics, cubic boron nitride based material or high speed steel onto which a wear resistant coating is composed of one or more layers of refractory compounds comprising at least one layer consisting of a crystalline MAX-phase.

The coating is composed of one or more layers of refractory compounds of which at least one layer comprises a so called MAX-phase defined as Mₙ₊₁AXₙwhere n is 1, 2 or 3, M is one of the elements Ti, Zr, Hf, V, Nb, Ta, Cr or Mo, preferably Ti, A is Al, Si or S, preferably Al,, X is C, N and/or B, preferably at least 40 at% N, more preferably (N₁₋ₓ,Cₓ) where x is between 0 and 0.6, most preferably N. The crystalline MAX-layer is deposited directly onto the cutting tool substrate but there can also be further layers between the tool body and the MAX-layer and/or on top of the MAX-layer composed of metal nitrides and/or carbides and/or oxides with the metal elements chosen from Ti, Zr, Hf, V, Nb, Ta, Cr, Mo, W, Si and Al. Preferably the MAX-layer is the outermost layer or the second outermost layer.

The thickness of said MAX-layer is between 0.1 and 20 µm, preferably between 0.5 and 10 µm. The total coating thickness according to the present invention is between 0.5 and 25 µm, preferably between 1 and 15 µm with the thickness of the non-MAN-layer(s) varying between 0.1 and 10 µm.

In an alternative embodiment the MAX-layer(s) of 0.5 to 20 µm, with or without a first layer according to above described, can an outer layer consisting of a solid low friction material based on MoS₂ or a MeC/C, where Me is Cr, W, Ti or Ta can be deposited as an outermost layer of the coating.

In yet an alternative embodiment the MAX-layers between 0.1 and 2 µm are one of 1 to 5 different materials in a multi-layer coating consisting of individually 2-500 layers.

In yet an alternative embodiment the MAN-layers 0.5 and 20 µm can be deposited on top of a CVD coating which may comprise one or several layer(s) of a crystalline Al₂O₃.

In yet an alternative embodiment, MAN-layers are deposited on top of and/or below the MAX-layer.

The method used to grow a MAX-layer according to the present invention are either based on magnetron sputtering of an alloy or composite target or a combined process utilising both arc evaporation and magnetron sputtering of a alloy or composite target/cathode under the following conditions which is exemplified by the Ti/Al-system:

Magnetron sputtering of the MAN-layer is performed using the following data:

Magnetron power density: 2-40 W/cm², preferably 5-15 W/cm²

The atmosphere used is a mixture of Ar and N₂. The partial pressure of N₂ is in the range of 1-30 mPa, preferably between 2-15 mPa.

Total pressure is in the range of 0.05 - 2 Pa, preferably between 0.02-1 Pa.

Bias voltage Vₛ: <0 V, preferably between -5 and -100 V

TiAl-targets with a composition depending on the desired phase is used such as: 75 at% Ti + 25 at% Al for Ti₃AlN₂, 67 at% Ti + 33 at% Al for Ti₂AlN or 80 at% Ti + 20 at% Al for Ti₄AlN₃ are to be used.

The deposition temperature is in the range of 600 - 1000 °C, preferably between 700-900 °C.

The MAN-phase is probably obtained due to the very low partial pressures of N₂.

Magnetron sputtering of a MAX-layer like Ti₃AlC₂ is performed using similar data as for the Ti₃AlN₂ but using a pure Ar atmosphere and a second target for sputtering of C.

The present invention has been described with reference to layers consisting of a MAN-phase and arc evaporated (Ti,Al)N-layers. It is obvious that coatings comprising MAX-layers can also be of advantage in combination with layers grown using other technologies as chemical vapour deposition (CVD) and plasma activated chemical vapour deposition (PACVD), as well as in combination with layers of other materials, if any at all, consists of metal nitrides and/or carbides and/or oxide with the metal elements chosen from Ti, Zr, Hf, V, Nb, Ta, Cr, Mo, W, Si and Al.

Since some of the MAN/MAX-phases also form metal carbonitride compounds, and by using PVD-technique to grow the MAN-layer, it is simple by adding some carbon containing gas to the atmosphere during deposition (e.g. C₂H₂ or CH₄), it is obvious that carbon alloyed MAN-phases can be obtained e.g. when sputtering from a Ti/Al target; Ti₂Al(N₁₋ₓ, Cₓ), Ti₃Al (N₁₋ₓ, Cₓ)₂ or Ti₄Al(N₁₋ₓ, Cₓ)₃ where x is between 0 and 0.6.

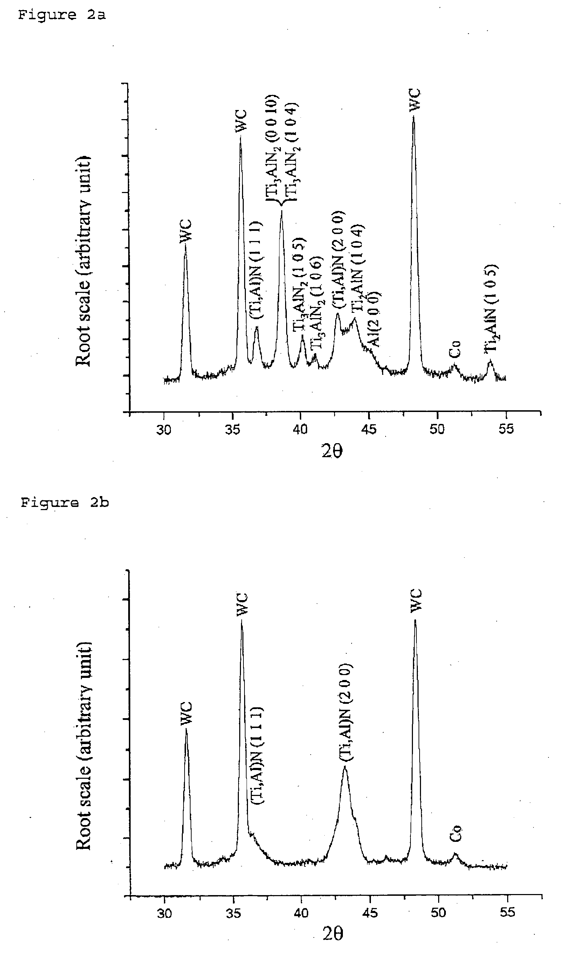

MAX/MAN-phases in the coating can be detected by X-ray diffraction (XRD) analysis. In figure 2 this is exemplified in the Ti/Al-system showing the MAN-phases Ti₂AlN, Ti₃AlN₂. By comparing the XRD patterns in figure 2a ((Ti_{0.33}Al_{0.67})N first layer and MAN-layer) with figure 2b (only the first layer of figure 2a; the (Ti_{0.33}Al_{0.67})N layer). A number of new peaks appear when the MAN-layer has been applied, see e.g. between 37.5 to 41.5 °2θ (using CuKα radiation) corresponding to a lattice spacing of 0.217 to 0.240 nm. That those peaks do not correspond to a NaCl-structured phase like TiN and (Ti,Al)N can be determined by examining whether corresponding peaks from (111) or (200) originating from a NaCl-phase, of approximately the same lattice parameter, occurs (small deviations from this can occur due to texture and stress state of the coating).

### Example 1

Cemented carbide substrates with composition 6 wt% Co and 94 wt% WC were used. The WC grain size was about 1 µm and the hardness was 1650 HV₁₀.

Before deposition, the substrates were cleaned in ultrasonic baths of an alkali solution and alcohol.

A first layer of (Ti_{0.33}Al_{0.67})N was grown using arc evaporation of six Ti/Al (33 at% Ti + 67 at% Al) cathodes (63 mm in diameter) in an Ar/N₂ atmosphere at total pressure of 2.0 Pa, using a substrate bias of -130 V. The deposition was carried out during 40 min in order to obtain a coating thickness of approximately 2 µm. The deposition temperature was ~ 550°C

A MAN-layers were deposited on top of the (Ti_{0.33}Al_{0.67})N layer in a commercially available deposition system aimed for thin film deposition equipped with a dc magnetron sputter source with a 75 at% Ti + 25 at% Al target (diameter 63 mm).

During the magnetron sputtering of the MAN-layer the substrates were stationarily positioned 30 cm from the magnetron and radiation heated for 60 min to about 870°C, measured with a thermocouple attached to the substrate holder. Immediately after heating, the substrates were argon-ion etched for 10 minutes using a substrate bias of -1000 V. The subsequent MAN-phase deposition was carried out at the following three different nitrogen partial pressures, P_{N2}; 12.0, 6.7 and 5.3 mPa with a balance of Ar at a constant total pressure of 0.5 Pa. A substrate bias of Vₛ; -25V, a magnetron power of 450 W, (constant current of 0.65 A), resulting in a target potential of about 670 V and were maintained constant during deposition of all layers. The deposition process proceeded for 30 min resulting in a MAN-layer thickness of ~ 1 µm.

XRD analysis, se figure 2, showed peaks originating from the WC phase of substrate, together with peaks from the cubic (Ti_{0.33}Al_{0.67})N layer. However, a large number of additional peaks can also be seen from the hexagonal MAN-phases indexed as Ti₂AlN and Ti₃AlN₂, see e.g. between 37.5 to 41.5 °2θ for Ti₃AlN₂ and at 54 °2θ of Ti₂AlN. The film grown with the highest P_{N2} (12.0 mPa) also exhibited a small peak probably from the cubic Ti₃AlN to be found at 22° 2θ (CuKα radiation). The peak corresponding to (104) and (00 10) directions of Ti₃AlN₂ are strong for both layers grown with the lowest P_{N2}, se table 1. The layer grown with the highest P_{N2} shows only a smaller peak for those direction but instead a strong peak for the (105) direction of Ti₃AlN₂. A small peak from the (106) of Ti₃AlN₂ direction can only be found for the film grown with the intermediate P_{N2}. All films have a small peak corresponding to the (106) direction of Ti₂AlN.

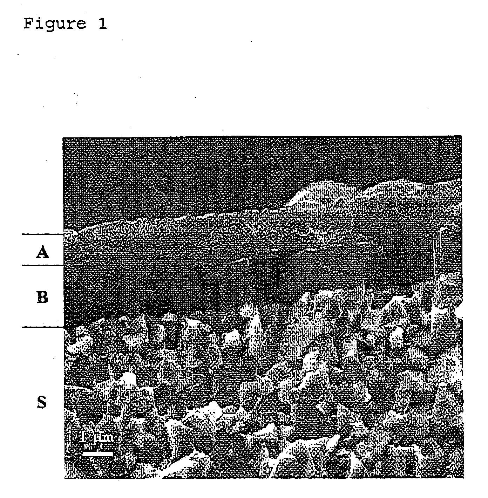

SEM studies of fracture cross-sections revealed columnar structure for all layers deposited, no significant contrast and morphology difference between the cubic (Ti,Al)N and the hexagonal MAN-layers could easily be seen. However, in higher magnification, a columnar morphology of the MAN-layer grown using P_{N2} = 6.7 mPa, see figure 1, could be seen. The grain size of the MAN-layer is less than 1 µm.

From a scratch test it was concluded that the adhesion was good for all layers. There was no significant difference in critical load F_{N,C} among the layers deposited with different P_{N2} values. They were all in the 40-50 N range. However, the deformation mode is different between the layers consisting of a hexagonal purely MAN-top-layer and the one with small quantity of a cubic Ti₃AlN (P_{N2} = 12 mPa). The initial failure for the top layer of all pure MAN-layer containing coatings was plastically deformed without spalling, while for the coatings with some cubic Ti₃AlN also some small cohesive fractures occur. If the scratches of the MAN-layers containing coatings are compared with scratch from a coating without the top-MAN-layer a clear difference can be seen showing a large number of cohesive failures around the scratches of the latter. Thus, the scratch test demonstrate that coatings according to present invention comprising a MAN containing layer have strongly enhanced toughness properties compared with coatings grown without.

**Table 1.**

| The peak height in cps (counts per second) above background for different MAN peaks. | | | | | |
|---|---|---|---|---|---|
| Variant | P_{N2} [mPa] | Peak height [cps] MAN "312" (104)+(00 10) | Peak height [cps] MAN "312" (105) | Peak height [cps] MAN "312" (106) | Peak height [cps] MAN "211" (106) |
| A | 5.3 | 4930 | 310 | - | 85 |
| B | 6.7 | 2940 | 290 | 120 | 138 |
| C | 12.0 | 420 | 1130 | - | 220 |

### Example 2

Cemented carbide cutting tool inserts, SNGN120408 (WC-6 wt%Co, were coated with a 2 µm thick (Ti_{0.33}Al_{0.67})N as a first layer and a 1 µm thick MAN-layer according to example 1 variant B. As a reference an insert of similar geometry and substrate, coated with a single-layer, similar to the first layer of the MAN coated variant, hereafter called variant D were used.

A face milling test with interrupted cut was performed in SS2541 (using three 20 mm wide plates separated by 10 mm, mounted as a package), at v_{c} = 200 m/min, f = 0.1 mm/rev and depth of cut = 2.5 mm.

| Variant | Tool life, mm | Failure mode |
|---|---|---|
| B | 2200 | Chipping and flank wear |
| D | 1500 | Chipping |

This test demonstrates the enhanced toughness of the variant with a top MAN-layer compared to a standard coating.

### Example 3

The variants according to example 2 were tested in a side milling operation of SS2343. This test is designed to put demands on toughness in combination with low tendency of work material to adhere to the insert.

The side milling test were performed in SS2343, using a solid work piece, at v_{c} = 200 m/min, f = 0.1 mm/rev and depth of cut = 2.5 mm.

| Variant | Tool life, mm | Failure mode |
|---|---|---|
| B | 2400 | Chipping and flank wear |
| D | 1200 | Chipping |

This test also demonstrates the enhanced toughness in combination with decreased tendency of chip adherence using a top MAN-layer.

## Claims

1. Cutting tool insert comprising a substrate and a coating **characterised in that** the coating is composed of one or more layers of refractory compounds of which at least one layer comprises a so called MAX-phase defined as Mₙ₊₁AXₙ where n is 1, 2 or 3, M is one of the elements Ti, Zr, Hf, V, Nb, Ta, Cr or Mo, A is Al, Si or S, X is C, N and/or B.

2. Cutting tool insert according to claim 1 **characterised in that** X is at least 40 at% N.

3. Cutting tool according to claim 2 **characterised in that** M is Ti, A is Al and X is (N₁₋ₓ, Cₓ) where x is between 0 and 0.6.

4. Cutting tool according to claim 3 **characterised in that** X is N.

5. Cutting tool according to any of the preceding claims **characterised in that** said layer is the outermost or the second outermost layer of the coating.

6. Cutting tool according to any of the preceding claims **characterised in that** said layer is combined with at least one additional hard wear resistant layer of metal nitrides and/or carbides and/or oxides of metal elements chosen from Ti, Zr, Hf, V, Nb, Ta, Cr, Mo, W, Si and Al.

7. Cutting tool according to any of the preceding claims **characterised in that** said layer has a thickness of 0.5-20 µm, preferably 0.5-10 µm.

8. Cutting tool according to any of the preceding claims **characterised in that** said layer is deposited with PVD technique.
